# EUROPEAN PATENT APPLICATION

(11) **EP 4 685 205 A1**
(43) Date of publication of application: **28.01.2026**
(21) Application number: 25191377.8
(22) Date of filing: 23.07.2025
(51) Int. Cl.: C09K 8/00, B01D 17/04, C10G 33/04

(54) **OILFIELD COMPOSITION**

(30) Priority: 25.07.2024 US 202463675416 P
(71) Applicant: Nouryon Chemicals International B.V., 1101 BZ Amsterdam (NL)
(72) Inventor: TALEAT, Zahra, 1101 BZ Amsterdam (NL); KARLSON, Leif Olof, 1101 BZ Amsterdam (NL); PRINS, Fred Erik, 1101 BZ Amsterdam (NL)
(74) Representative: Ingrassia, Fisher & Lorenz UK Ltd.

(57) **Abstract**

An oilfield composition includes an O/W emulsion including crude oil and water; and a particular cellulose ether. A method of separating the crude oil and the water includes the steps of a) providing the O/W emulsion; b) providing the particular cellulose ether; c) combining the cellulose ether and the O/W emulsion, wherein the cellulose ether is present in an amount of from about 1 to about 20 parts by weight per one million parts by weight of the combination of the cellulose ether and the O/W emulsion; and subsequently, and d) separating the crude oil from the water.

## Description

### TECHNICAL FIELD

The present disclosure generally relates to an oilfield composition. More specifically, the oilfield composition includes an O/W emulsion including crude oil and water and a particular cellulose ether.

### BACKGROUND

The production of oil from oilfields typically generates dispersions of oil and various solid contaminants in water, which may also be known as produced water. Treatment of this water may be performed to remove oil and solid contaminants before discharging the water into the surrounding environment and/or reused in future oilfield operations. Generally, the treatment of the water involves the use of flocculants.

Flocculants are typically used in water treatment processes to aid the removal of oil and suspended solids, and/or clarify the water. Flocculants can promote the aggregation of solids and oil, which can subsequently be separated from the water using various apparatus, e.g. a skimmer, a separator, etc.

However, many conventional flocculants are synthetic, non-biodegradable, and may not meet the increasing environmental standards. Accordingly, there is an opportunity for improvement.

### BRIEF SUMMARY

This disclosure provides an oilfield composition including an O/W emulsion including crude oil and water; and a cellulose ether that has the structure: 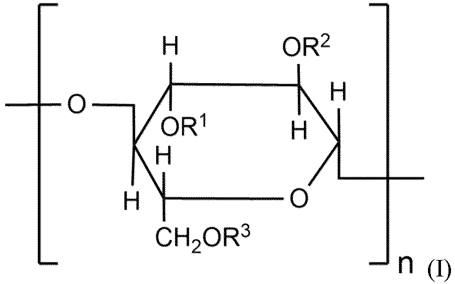 wherein each R¹, R² and R³ is independently H, a carboxymethyl group, a C1-C18 alkyl group, or a C2-C3 hydroxy alkyl group, so long as not all R¹, R² and R³ are H; wherein n is from about 800 to about 10,000; and wherein the cellulose ether is present in an amount of from about 1 to about 20 parts by weight per one million parts by weight of the composition.

The present disclosure also provides a method of separating crude oil and water, the method including the steps of a) providing an O/W emulsion including crude oil and water; b) providing a cellulose ether that has the structure: 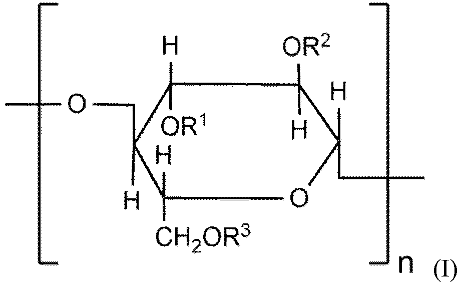 wherein each R¹, R² and R³ is independently H, a carboxymethyl group, a C1-C18 alkyl group, or a C2-C3 hydroxy alkyl group, so long as not all R¹, R² and R³ are H; and wherein n is from about 800 to about 10,000; c) combining the cellulose ether and the O/W emulsion, wherein the cellulose ether is present in an amount of from about 1 to about 20 parts by weight per one million parts by weight of the combination of the cellulose ether and the O/W emulsion; and subsequently d) separating the crude oil from the water.

### BRIEF DESCRIPTION OF THE DRAWINGS

The present disclosure will hereinafter be described in conjunction with the following figures, wherein
FIG. 1A is a photograph of six containers of O/W emulsions, before the addition of the cellulose ethers to the O/W emulsions to make Compositions 1 to 6 of the Examples (arranged from left to right);
FIG 1B is a photograph of six containers of O/W emulsions, 10 minutes after the addition of the cellulose ethers to the O/W emulsions to make Compositions 1 to 6 of the Examples (arranged from left to right);
FIG. 2 is a photograph of three containers of CE 1 of the Examples, which is free of cellulose ether, and Compositions 7 and 8 also of the Examples (arranged from left to right);
FIG. 3 is photograph of five test tubes filled with CE 1 and Compositions 9 to 12 of the Examples (arranged from left to right);
FIG. 4 is bar graph showing the clarity rating as a function of time after the addition of the cellulose ethers of CE 1 and Compositions 7 to 9 of the Examples (arranged from left to right).
FIG. 5 is photograph of five test tubes filled with CE's 1 to 5 of the Examples (arranged from left to right).

### DETAILED DESCRIPTION

The following detailed description is merely exemplary in nature and is not intended to limit the current composition. Furthermore, there is no intention to be bound by any theory presented in the preceding background or the following detailed description.

Embodiments of the present disclosure are generally directed to cellulose ethers, compositions including the same, and methods for forming and using the same. For the sake of brevity, conventional techniques related to making cellulose ethers and such compositions may not be described in detail herein. Moreover, the various tasks and process steps described herein may be incorporated into a more comprehensive procedure or process having additional steps or functionality not described in detail herein. In particular, various steps in the manufacture of cellulose ethers and associated compositions are well-known and so, in the interest of brevity, many conventional steps will only be described briefly herein or will be omitted entirely without providing the well-known process details.

In this disclosure, the terminology "about" can describe values ± 0.1, 0.5, 1, 2, 3, 4, 5, 6, 7, 8, 9, or 10%, in various embodiments. Moreover, it is contemplated that, in various non-limiting embodiments, it is to be appreciated that all numerical values as provided herein, save for the actual examples, are approximate values with endpoints or particular values intended to be read as "about" or "approximately" the value as recited. It is also contemplated that all isomers and chiral options for each compound described herein are hereby expressly contemplated for use herein in various non-limiting embodiments.

In various embodiments, the terminology "free of" describes embodiments that include less than about 5, 4, 3, 2, 1, 0.5, or 0.1, weight percent (or weight percent actives) of the compound or element at issue using an appropriate weight basis as would be understood by one of skill in the art. In other embodiments, the terminology "free of" describes embodiments that have zero weight percent of the compound or element at issue.

The terminology "consists essentially of" may describe various non-limiting embodiments that are free of one or more optional compounds described herein and/or free of one or more cellulose ethers, surfactants, additives, etc.

It is to be understood that the subscripts of cellulose ethers are typically described as average values because the synthesis of cellulose ethers typically produces a distribution of various individual molecules.

The cellulose ethers and compositions disclosed herein may suitably comprise, consist of, or consist essentially of the components, elements, and process delineations described herein. The embodiments illustratively disclosed herein suitably may be practiced in the absence of any element which is not specifically disclosed herein.

### Oilfield Composition:

This disclosure provides an oilfield composition that includes an O/W emulsion including crude oil and water, and a cellulose ether. The "oilfield composition" may also be described herein as the "composition." The composition may include treated water from an oilfield, treated produced water, which is known in the art to include water, oil and/other contaminants, a combination of produced water and a flocculant, clarified water, a clarification mixture, a flocculant mixture, a flocculant suspension, etc. The composition may be used to treat and/or clarify water, e.g. water from an oilfield. Alternatively, the composition may be used to feed into subsequent water treatment processes, to discharge into the environment, or to reuse in future oilfield processes.

### O/W Emulsion:

The composition includes an O/W (oil in water) emulsion, which may be described as a dispersion of crude oil, e.g. as oil droplets, in water. Accordingly, the crude oil may be described as a dispersed phase and the water may be described as a continuous phase of the O/W emulsion.

The "crude oil" may also be described as "oil," and may be from various sources, e.g. from a sedimentary basin, a sandstone or limestone reservoir, a continental shelf, a deepwater reservoir, a shale formation, etc. The crude oil may be refined or unrefined, paraffinic or naphthenic, and may include various types of hydrocarbons, e.g. alkanes, cycloalkanes, aromatic hydrocarbons, etc., and/or non-hydrocarbons including organic compounds that include sulfur, nitrogen, oxygen, and trace metals. Accordingly, the crude oil may exhibit various physical properties, e.g. viscosity, density, etc. and chemical properties, e.g. sulfur content, aromatic content, etc. For example, the crude oil may be free flowing or viscous at room temperature. Additionally, the crude oil may exhibit a density, which may be measured using any methods known in the art, e.g. according to standardized methods such as ASTM D4052, ISO 12154:2014, etc., by using an apparatus such as a hydrometer, a Coriolis density meter, or calculated from the weight and volume of the oilfield composition, etc. In various embodiments, the density of the crude oil may be measured relative to the specific density of water, also known as API gravity, of about 10 to about 40 degrees, about 10 to about 20 degrees, about 20 to about 30 degrees, about 30 to about 40 degrees, about 10 to about 30 degrees, about 20 to about 40 degrees, etc. In various non-limiting embodiments, all values and ranges of values including and between those set forth above are expressly contemplated for use herein. A larger API gravity describes a lighter density crude oil compared to a crude oil with a smaller API gravity.

The crude oil may also be described as "sweet" or "sour," which is known in the art to describe a sulfur content of less than about 1 wt% or 1 wt% or more, based on a total weight of the crude oil, respectively. The sulfur content of the crude oil may be from about 0.1 to 2 wt%, about 0.1 to about 0.5 wt%, about 0.5 to about 1 wt%, about 0.5 to about 1 wt%, about 1 to about 1.5 wt%, about 1.5 to about 2 wt%, about 0.1 to about 1 wt%, about 1 to about 2 wt%, about 0.5 to about 1.5 wt%, etc. In various non-limiting embodiments, all values and ranges of values including and between those set forth above are expressly contemplated for use herein.

The crude oil may be present in the O/W emulsion in various amounts, dependent on different oilfield process, methods of water treatment previously performed if any, the type of oil, etc. In various embodiments, the crude oil is present in the O/W emulsion in an amount of from about 1 to about 10,000 parts by weight per one million parts by weight of the O/W emulsion. In other embodiments, the crude oil is present in an amount of from about 1 to about 200, about 10 to about 190, about 20 to about 180, about 30 to about 170, about 40 to about 160, about 50 to about 150, about 60 to about 140, about 70 to about 130, about 80 to about 120, about 90 to about 110, or about 90 to about 100 parts by weight per one million parts by weight of the O/W emulsion. In yet other embodiments, the crude oil is present in an amount of from 200 to about 1000, about 300 to about 900, about 400 to about 800, about 500 to about 700, or about 500 to about 600 parts by weight per one million parts by weight of the O/W emulsion. In various embodiments, the crude oil is present in an amount of from 1000 to about 5,000, about 1500 to about 4500, about 2000 to about 4000, about 2500 to about 3500, or about 2500 to about 3000 parts by weight per one million parts by weight of the O/W emulsion. In other embodiments, the crude oil is present in an amount of from 5000 to about 10,000, about 5500 to about 9500, about 6000 to about 9000, about 6500 to about 8500, or about 7000 to about 8000 parts by weight per one million parts by weight of the O/W emulsion. In various non-limiting embodiments, all values and ranges of values including and between those set forth above are expressly contemplated for use herein.

The O/W emulsion may be combined with the cellulose ether, which may cause the crude oil to aggregate and/or coalesce. The aggregated crude oil may be present in an amount that is the same as, or different from, the amount of crude oil in the O/W emulsion described above.

The O/W emulsion includes water as the continuous phase. The water may be from various sources, e.g. from underground reservoirs, pore spaces of rock formations, fresh water, e.g. water pumped in hydraulic fracking operations, sea water from offshore drilling, etc. The water may also include, or be free of, dissolved minerals and salts, e.g. chloride salts such as NaCl, CaCl₂, MgCl₂, sulfate salts such as CaSO₄, MgSO₄, BaSO₄, carbonate salts such as CaCO₃, MgCO₃, bicarbonate salts such as NaHCO₃, Ca(HCO₃)₂, salts of iron, salts of manganese, salts strontium, salts of lithium, etc. Accordingly, the water may exhibit various salinities, e.g. from about 0 to about 500 g total dissolved solids (TDS) per liter of water. In various embodiments, the salinity of the water is from about 0 to about 10, about 1 to about 9, about 2 to about 8, about 3 to about 7, about 4 to about 6, or about 4 to about 5 g TDS per liter of water. In various non-limiting embodiments, all values and ranges of values including and between those set forth above are expressly contemplated for use herein.

The various amount of TDS in the water can also affect other chemical properties of the water, including pH, density, etc. For example, the water may have a pH that is acidic, neutral, or basic, typically from about 4 to about 9. In various embodiments, the water has a pH that is about 4, about 4.5, about 5, about 5.5, about 6, about 6.5, about 7, about 7.5, about 8, about 8.5, or about 9. In various non-limiting embodiments, all values and ranges of values including and between those set forth above are expressly contemplated for use herein.

Depending on the amount of TDS present in the water, the water may exhibit various densities, typically of from about 1 to about 1.3 g/cm³, about 1 to about 1.1 g/cm³, about 1 to about 1.2 g/cm³, about 1 to about 1.3 g/cm³, about 1.1 to about 1.2 g/cm³, about 1.1 to about 1.3 g/cm³, or about 1.2 to about 1.3 g/cm³. In various non-limiting embodiments, all values and ranges of values including and between those set forth above are expressly contemplated for use herein.

The water may be present in the oilfield composition in various amounts, typically from about 90 and up to about less than about 100 wt%, based on a total weight of the oilfield composition. In various embodiments, the water is present in an amount of from about 90 and up to about less than about 100 wt%, about 90 to about 99 wt %, about 91 to about 98 wt %, about 92 to about 97 wt %, about 93 to about 96 wt %, or about 94 to about 95 wt %, based on a total weight of the oilfield composition. In various non-limiting embodiments, all values and ranges of values including and between those set forth above are expressly contemplated for use herein.

### Cellulose Ether:

The composition also includes the cellulose ether that is typically soluble or dispersible in water. The cellulose ether may be described as a polymer derived from cellulose, which is a natural polysaccharide. Accordingly, the cellulose ether can be non-toxic, biocompatible and/or biodegradable.

The cellulose ether may be used as a flocculant, a coagulant, a demulsifier, a deoiler, a clarifier, etc. Accordingly, the cellulose ether may be used to break O/W emulsions or clarify water.

The cellulose ether may be further described as soluble or dispersible in water. Additionally, the cellulose ether may be soluble or dispersible in other solvents and solvent systems, including but not limited to organic solvents, e.g. ethanol, methanol, propanol, acetone etc., or combinations of water and one or more organic solvents. The cellulose ether may also be soluble or dispersible in aqueous solutions that may include other water-soluble compounds, e.g. ionic compounds. The cellulose ether may also exhibit different solubility, which may be measured at various temperatures, using various techniques known in the art, e.g., using a standardized method such as ASTM D5546, ISO 25179:2018, etc., using a gravimetric method, a titration method, a spectroscopic method, a conductometric method, etc.

In various embodiments, the solubility of the cellulose in water at ambient conditions, e.g. about 25 °C and about 1 atm, measured using any of the aforementioned methods, is from about 5 to about 20 mg of the cellulose ether per mL of water. In other embodiments, the solubility of the cellulose ether is from about 5 to about 19, about 6 to about 18, about 7 to about 17, about 8 to about 16, about 9 to about 15, about 10 to about 14, about 11 to about 13, or about 11 to about 12 mg of the cellulose ether per mL of water. In various non-limiting embodiments, all values and ranges of values including and between those set forth above are expressly contemplated for use herein.

The cellulose ether has the structure below: 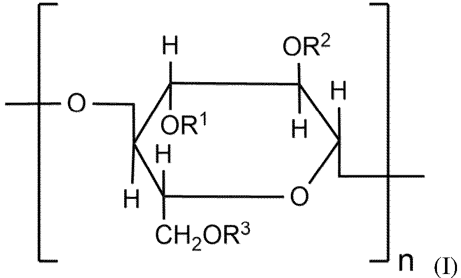
wherein each R¹, R² and R³ is independently H, a carboxymethyl group, a C1-C18 alkyl group, or a C2-C3 hydroxy alkyl group, so long as not all R¹, R² and R³ are H;
and wherein n is from about 800 to about 10,000.

Each R¹, R² and R³ is independently H, a carboxymethyl group, a *C1-C18* alkyl group, or a C2-C3 hydroxy alkyl group, so long as not all R¹, R² and R³ are H. In various embodiments, one of R¹, R² and R³ may be H. In other embodiments, one of R¹, R² and R³ may be a C1-C18 alkyl group, or a C2 to C17 group, a C3 to C16 group, a C4 to *C15* group, a C5 to C14 group, a C6 to C13 group, a C7 to C12 group, a C8 to C11 group, a C9 to C10 group, a C1 to C3 group, a C1 to C5 group, a C2 to C3 group, a C2 to C4 group, or a C2 to C5 group. In various non-limiting embodiments, all values and ranges of values including and between those set forth above are expressly contemplated for use herein.

In various other embodiments, one of R¹, R² and R³ may be a C2-C3 hydroxy alkyl group, which may be alternatively described as hydroxymethyl and hydroxyethyl, respectively.

In yet other embodiments, one of R¹, R² and R³ may be a carboxymethyl group. In various embodiments, each R¹, R² and R³ is independently H or a carboxymethyl group, which may be charge balanced by a counter ion, e.g. H⁺, Na⁺, Ca²⁺, Mg²⁺, etc., so long as at least one of R¹, R² and R³ is a carboxymethyl group, and the cellulose ether may be further described as a carboxymethyl cellulose. Typically, the carboxymethyl cellulose includes Na⁺ as the counter ion and may be additionally described as carboxymethyl cellulose sodium salt.

In other embodiments, each R¹, R² and R³ is independently H or a methyl group, so long as at least one of R¹, R² and R³ is a methyl group, and the cellulose ether may be further described as methyl cellulose.

In various embodiments, one of R¹, R² and R³ is H, one of R¹, R² and R³ is a methyl group, and one of R¹, R² and R³ is a hydroxypropyl group, and the cellulose ether may be further described as hydroxypropyl methyl cellulose.

In other embodiments, one of R¹, R² and R³ is H, one of R¹, R² and R³ is an ethyl group, and one of R¹, R² and R³ is a hydroxypropyl group, and the cellulose ether may be further described as hydroxypropyl ethyl cellulose.

In yet other embodiments, one of R¹, R² and R³ is H, one of R¹, R² and R³ is a methyl group, and one of R¹, R² and R³ is a hydroxyethyl group, and the cellulose ether may be further described as hydroxyethyl methyl cellulose.

In other embodiments, one of R¹, R² and R³ is H, one of R¹, R² and R³ is a methyl group, and one of R¹, R² and R³ is a hydroxyethyl group, and the cellulose ether may be further described as hydroxyethyl methyl cellulose.

In various embodiments, one of R¹, R² and R³ is H, one of R¹, R² and R³ is an ethyl group, and one of R¹, R² and R³ is a hydroxyethyl group, and the cellulose ether may be further described as hydroxyethyl ethyl cellulose.

In various other embodiments, one of R¹, R² and R³ is a methyl group, one of R¹, R² and R³ is an ethyl group, and one of R¹, R² and R³ is a hydroxyethyl group, and the cellulose ether may be further described as methyl ethyl hydroxyethyl cellulose.

In various non-limiting embodiments, other combinations of R¹, R² and R³ are expressly contemplated for use herein. In other non-limiting embodiments, one, two or multiple (three or more) combinations of R¹, R² and R³ are also expressly contemplated within one structure of the cellulose ether.

In various non-limiting embodiments, the oilfield composition includes one cellulose ether. In other embodiments, the oilfield composition includes two or multiple (three or more) cellulose ethers, so long as at least one cellulose ether is as described herein. In various embodiments, the oilfield composition includes one cellulose ether of this disclosure and one or more cellulose ethers not described herein. In other embodiments, the oilfield composition includes one or more cellulose ethers of this disclosure.

Referring to n, n can be described as the number of repeating units of the cellulose ether. In various embodiments, n is from about 800 to about 10,000, about 800 to about 10,000, about 2000 to about 10,000, about 4000 to about 10,000, about 5000 to about 10,000, about 6000 to about 10,000, about 7000 to about 10,000, about 8000 to about 10,000, or about 9000 to about 10,000. In other embodiments, n is from about 1000 to about 3000, about 1100 to about 3900, about 1200 to about 3800, about 1300 to about 3700, about 1400 to about 3600, about 1500 to about 3500, about 1600 to about 3400, about 1700 to about 3300, about 1800 to about 3200, about 1900 to about 3100, about 2000 to about 3000, about 2100 to about 2900, about 2200 to about 2800, about 2300 to about 2700, about 2400 to about 2600, or about 2500 to about 2600. In yet other embodiments, n if from about 3000 to about 10,000, about 3500 to about 9500, about 4000 to about 9000, about 4500 to about 8500, about 5000 to about 8000, about 5500 to about 7500, or about 6000 to about 7000. In various non-limiting embodiments, all values and ranges of values including and between those set forth above are expressly contemplated for use herein.

The cellulose ether may be described as a derivative of a cellulose, and the structure of cellulose may be described as structure (I) when all of R¹, R² and R³ is H. In other words, the cellulose ether may be described as including repeating D-anhydroglucose units joined together by β-1-4-glycosidic bonds and connected to pendant R¹, R², R³ groups, which are first described above. Derivatization can be performed to alter the properties of the cellulose, e.g. solubility, viscosity, etc. and form the cellulose ether. Derivatization of the cellulose may alternatively be described as etherification, modification, or substitution of a hydroxyl group with an ether group.

The cellulose ether may also be described relative to an average degree of substitution (DS), which describes the average number of hydroxyl groups substituted with ether groups per repeating D-anhydroglucose unit. The repeating D-anhydroglucose unit may have up to three hydroxyl groups to substitute. Thus, the average DS may be from about greater than 0 and up to about 3. In various embodiments, the average DS is from about greater than 0 and up to about 3, about 0.1 to about 2.9 about 0.2 to about 2.8, about 0.3 to about 2.7, about 0.4 to about 2.6, about 0.5 to about 2.5, about 0.6 to about 2.4, about 0.7 to about 2.3, about 0.8 to about 2.2, about 0.9 to about 2.1, or about 1.0 to about 2.0, about 1.1 to about 1.9, about 1.2 to about 1.8, about 1.3 to about 1.7, about 1.4 to about 1.6, or about 1.5 to about 1.6. In various non-limiting embodiments, all values and ranges of values including and between those set forth above are expressly contemplated for use herein.

The cellulose ether may further be described relative to an average degree of molar substitution (MS). Unlike the DS, MS describes the average number of hydroxy alkyl groups per repeating D-anhydroglucose unit, which may also be from about greater than 0 to about 3. In various embodiments, the average MS is from about greater than 0 and up to about 3, about 0.1 to about 2.9 about 0.2 to about 2.8, about 0.3 to about 2.7, about 0.4 to about 2.6, about 0.5 to about 2.5, about 0.6 to about 2.4, about 0.7 to about 2.3, about 0.8 to about 2.2, about 0.9 to about 2.1, or about 1.0 to about 2.0, about 1.1 to about 1.9, about 1.2 to about 1.8, about 1.3 to about 1.7, about 1.4 to about 1.6, or about 1.5 to about 1.6. In various non-limiting embodiments, all values and ranges of values including and between those set forth above are expressly contemplated for use herein.

The cellulose ether may be described using various parameters such as pH, charge, viscosity, solubility, etc. For example, the cellulose ether may exhibit a pH that is acidic, neutral, or basic. The cellulose ether may exhibit a pH of from about 5 to about 9, e.g. about 5, about 5.5, about 6, about 6.5, about 7, about 7.5, about 8, about 8.5, or about 9. In various non-limiting embodiments, all values and ranges of values including and between those set forth above are expressly contemplated for use herein.

The cellulose ether may be free of charge and may be further described as non-ionic. Alternatively, the cellulose ether may have a negative charge, and may be further described as anionic, which may be charge balanced with a counter ion, as previously described.

The cellulose ether may exhibit various viscosities when disposed in a solvent system, e.g. water, an organic solvent e.g. ethanol, methanol, propanol, acetone etc., which may be dependent on the DS, the MS, and/or the value of n. The viscosity may be measured using any standardized method known in the art, e.g. ISO 17025, ISO 17034, ASTM D2196, ASTM D445, etc. Various analytical instruments and apparatus may also be used, e.g. a rotary viscometer such as a Brookfield viscometer, with a spindle speed of from about 4 to about 6 rpm, at about 20 to about 25 °C, and using a sheer rate of about 100 s⁻¹. In various embodiments, the viscosity of the cellulose ether is determined using a solution of about 1 wt%, 2 wt%, 3 wt%, 4 wt%, or 5 wt% of the cellulose ether in the solvent system. In various embodiments, the viscosity of the cellulose ether, measured using any of the aforementioned method, is from about 1 to about 100,000 cP. In other embodiments, the viscosity of the cellulose ether is from about 1 to about 100 cP, about 10 to about 90 cP, about 20 to about 80 cP, about 30 to about 70 cP, about 40 to about 60 cP, or 50 to about 60 cP. In yet other embodiments, the viscosity of the cellulose ether is from about 100 to about 1,000 cP, about 200 to about 900 cP, about 300 to about 800 cP, about 400 to about 700 cP, or about 500 to about 600 cP. In other embodiments, the viscosity of the cellulose ether is from about 1,000 to about 10,000 cP, about 1,500 to about 9,500 cP, about 2,000 to about 9,000 cP, about 2,500 to about 8,500 cP, about 3,000 to about 8,000 cP, about 3,500 to about 7,500 cP, about 4,000 to about 7,000 cP, about 4,500 to about 6,500 cP, or about 5,000 to about 6,000 cP. In various other embodiments, the viscosity of the cellulose ether is from about 10,000 to about 100,000 cP, about 15,000 to about 95,000 cP, about 20,000 to about 90,000 cP, about 25,000 to about 85,000 cP, about 30,000 to about 80,000 cP, about 35,000 to about 75,000 cP, about 40,000 to about 70,000 cP, about 45,000 to about 65,000 cP, or about 50,000 to about 60,000 cP. In various non-limiting embodiments, all values and ranges of values including and between those set forth above are expressly contemplated for use herein.

The cellulose ether may exhibit various weight average molecular weights (M_{w}), which may also be dependent on the DS and the value of n. Accordingly, the weight average M_{w} of the cellulose ether may be from about 15 kDa to about 1,500 kDa. In various embodiments, the weight average M_{w} of the cellulose ether is from about 15 to about 100 kDa, about 20 to about 95 kDa, about 25 to about 90 kDa, about 30 to about 85 kDa, about 35 to about 80 kDa, about 40 to about 75 kDa, about 45 to about 70 kDa, about 50 to about 65 kDa, or about 55 to about 60 kDa. In other embodiments, the weight average M_{w} of the cellulose ether is from about 100 to about 700 kDa, about 150 to about 650 kDa, about 200 to about 600 kDa, about 250 to about 550 kDa, about 300 to about 500 kDa, about 350 to about 450 kDa, or about 350 to about 400 kDa. In yet other embodiments, the weight average M_{w} of the cellulose ether is from about 700 to about 1,500 kDa, about 750 to about 1,450 kDa, about 800 to about 1,400 kDa, about 850 to about 1,350 kDa, about 900 to about 1,300 kDa, about 950 to about 1,250 kDa, about 1,000 to about 1,200 kDa, about 1,050 to about 1,150 kDa, or about 1,050 to about 1,100 kDa. In various non-limiting embodiments, all values and ranges of values including and between those set forth above are expressly contemplated for use herein.

The cellulose ether may be used in a small dosage, e.g. in water treatment, and be present in the oilfield composition in an amount of from about 1 to about 20 parts by weight per one million parts by weight of the oilfield composition. In various embodiments, the cellulose ether is present in amount of from about 1 to about 20, about 2 to about 19, about 3 to about 18, about 4 to about 17, about 5 to about 16, about 6 to about 15, about 7 to about 14, about 8 to about 13, about 9 to about 12, about 10 to about 11 parts by weight per one million parts by weight of the oilfield composition. In various non-limiting embodiments, all values and ranges of values including and between those set forth above are expressly contemplated for use herein.

### Additional Components:

The oilfield composition may include, or be free of, additional components, which can be naturally present in the oilfield composition, produced from oilfield processes, or included for various purposes, e.g. further treating the water, preventing corrosion of oil field equipment, improving oil extraction, etc.

For example, the oilfield composition may include, or be free of, various dissolved gases, including but not limited to natural hydrocarbon gasses commonly found in oil reservoirs, e.g. methane, ethane, propane, butane, etc., carbon dioxide, which may be naturally present in oil reservoirs or included for applications, e.g. enhanced oil recovery (EOR), and other gasses that are naturally present in oil reservoirs in various amounts, e.g. hydrogen sulfide, nitrogen, helium, etc.

The oilfield composition may also include, or be free of, volatile organic compounds (VOCs), which may be toxic or non-toxic, chemically inert or active, and which are typically known in the art to include compounds such as benzene, toluene, ethylbenzene, xylene, chloroform, trichloroethylene, methanol, ethanol, acetone, formaldehyde, etc.

The oilfield composition may additionally and optionally include solids, in various sizes, shapes and types, typically suspended in the oilfield composition. For example, the solids may be sand, which may include of silica SiO₂; silt; clay, which may include kaolinite, illite, montmorillonite, etc., carbonates, e.g. calcite (CaCO₃), dolomite (CaMg(CO₃)₂), etc., and heavy minerals, which may include zircon, rutile, ilmenite, etc. The solids may or may not be from the oil reservoirs, which may be introduced to the oilfield composition through various oilfield processes. The solids may also be biological, e.g. microorganisms such as bacteria, algae, etc.

The additional components described above may be present in the oilfield composition in various amounts, depending on the oil reservoir, methods of oil extraction, water treatment techniques, etc. Accordingly, the additional components may be present in the oilfield composition in an amount of from about 0 to about 10 parts by weight per million parts by weight of the composition. In various embodiments, the solids are present in an amount of from about 0 to about 10, about 1 to about 9, about 2 to about 8, about 3 to about 7, about 4 to about 6, or about 4 to about 5 parts by weight per million parts by weight of the composition. In various non-limiting embodiments, all values and ranges of values including and between those set forth above are expressly contemplated for use herein.

The additional components described above may be corrosive to various equipment employed in oilfield processes. Accordingly, an additive may be included in the oilfield composition, e.g. to treat the water and/or prevent corrosion.

For example, the additive may be a corrosion inhibitor. Non-limiting examples of corrosion inhibitors include amine compounds that can adsorb onto surfaces of equipment, e.g. monoethanolamine (MEA), diethanolamine (DEA), triethanolamine (TEA), phosphonate compounds that can inhibit scale formation and/or provide corrosion protection by chelating metal ions, e.g. aminotris methylenephosphonic acid (ATMP), ethylenediaminetetra methylenephosphonic acid (EDTMP), etc., other chelating agents, e.g. glutamic acid, N,N-diacetic acid, diethylenetriaminepentaacetic acid, etc., oxygen scavengers that can react with dissolved oxygen in the water to reduce oxygen-induced corrosion, e.g. hydrazine hydrate, methylhydrazine, etc.

Additionally, the additive may be a biocide, which may be used to minimize microbial growth. Non-limiting examples of biocides include 2,2-dibromo-3-nitrilopropionamide (DBNPA), tetrakis (hydroxymethyl)phosphonium sulfate (THPS), glutaraldehyde, etc. The additive may also be a surfactant, which can be used for various purposes, e.g. attaining a desirable viscosity. Non-limiting examples of surfactants include sorbitan esters, sodium dodecyl sulfate, cetyl trimethyl ammonium bromide, alkylbenzene sulfonates, alkylphenol ethoxylates, cocamidopropyl betaine, tallow amidoamine oxide, etc.

The additive may be present in the oilfield composition in an amount of from about 0 to about 10 parts by weight per million parts by weight of the composition. In various embodiments, the additive is present in an amount of from about 0 to about 10, about 1 to about 9, about 2 to about 8, about 3 to about 7, about 4 to about 6, or about 4 to about 5 parts by weight per million parts by weight of the composition. In various non-limiting embodiments, all values and ranges of values including and between those set forth above are expressly contemplated for use herein.

### Physical Properties of the Oilfield Composition:

The oilfield composition may exhibit various physical properties, including but not limited to viscosity, turbidity, density, pH, amount of crude oil, etc., which may depend on factors such as the cellulose ether, e.g. DS, MS, n, the amount present in the oilfield composition, etc., the O/W emulsion, e.g. the amount of crude oil in the O/W emulsion, the oil reservoir from which the O/W emulsion originates, preceding water treatment techniques, etc.

Accordingly, the oilfield composition may exhibit various viscosities, typically from about 1.2 to about 2 mPas. In various embodiments, the viscosity of the oilfield composition is from about 1.2 to about 2 mPas, about 1.3 to about 1.9 mPas, about 1.4 to about 1.8 mPas, about 1.5 to about 1.7 mPas, or about 1.5 to about 1.6 mPas. The viscosity of the oilfield composition may be measured according to any method known in the art, as first described above. For example, such a method may be a standardized method known in the art, e.g. ISO 17025, ISO 17034, ASTM D2196, ASTM D445, etc., or using various analytical instruments and apparatus, e.g. a rotary viscometer such as a Brookfield viscometer, employing various settings. For example, a Brookfield viscometer may be used with a spindle speed of from about 4 to about 6 rpm, at about 20 to about 25 °C, and using a sheer rate of about 100 s⁻¹. In various non-limiting embodiments, all values and ranges of values including and between those set forth above are expressly contemplated for use herein.

The oilfield composition may also exhibit various turbidities, which can be used to describe the amount of solids and/or oil droplets suspended in the oilfield composition which may lead to the oilfield composition appearing cloudy, murky, muddy, dark, heterogenous, etc. Alternatively, the oilfield composition may also have an appearance that is clear, transparent, etc. Accordingly, the oilfield composition may have various appearances, e.g. color, clarity, etc., which may depend on the amount of cellulose ether, the length of time from combining the cellulose ether, previous water treatment methods, agitation or mixing of the oilfield composition, etc. The turbidity may also be quantitatively evaluated using various methods known in the art. For example, a standardized method, e.g. D7315, ISO 7027, etc. may be used. Alternatively, various apparatus, e.g. a UV-Vis, a benchtop meter, a submersible meter, etc.

The oilfield composition may exhibit various densities, which may be measured using any methods known in the art, e.g. according to standardized methods such as ASTM D4052, ISO 12154:2014, etc., by using an apparatus such as a hydrometer, a Coriolis density meter, or calculated from the weight and volume of the oilfield composition, etc. In various embodiments, the density of the oilfield composition is from about 1 to about 1.5 g/cm³, about 1.1 to about 1.4 g/cm³, about 1.2 to about 1.3 g/cm³, or about 1 to about 1.1 g/cm³. In various non-limiting embodiments, all values and ranges of values including and between those set forth above are expressly contemplated for use herein.

The oilfield composition may be described as slightly acidic, neutral, or slightly basic, indicated by pH, which may be measured using any methods known in the art, e.g. using a pH meter, using a pH indicator solution, using a pH test strip, performing a titration, etc. In various embodiments, the pH of the oilfield composition is from about 4 to about 9. In various embodiments, the water has a pH that is about 4, about 4.5, about 5, about 5.5, about 6, about 6.5, about 7, about 7.5, about 8, about 8.5, or about 9. In various non-limiting embodiments, all values and ranges of values including and between those set forth above are expressly contemplated for use herein.

As first described above, the oilfield composition may include a large amount of the O/W emulsion, e.g. from about 90 and up to less than about 100 wt%, based on a total weight of the composition. Accordingly, the amount of crude oil present in the oilfield composition may be the same as, or different from, the amount of crude oil present in the O/W emulsion. In various embodiments, the crude oil is present in the oilfield composition in an amount of from about 1 to about 10,000 parts by weight per million parts by weight of the oilfield composition. In other embodiments, the crude oil is present in an amount of from about 1 to about 200, about 10 to about 190, about 20 to about 180, about 30 to about 170, about 40 to about 160, about 50 to about 150, about 60 to about 140, about 70 to about 130, about 80 to about 120, about 90 to about 110, or about 90 to about 100 parts by weight per one million parts by weight of the oilfield composition. In yet other embodiments, the crude oil is present in an amount of from 200 to about 1000, about 300 to about 900, about 400 to about 800, about 500 to about 700, or about 500 to about 600 parts by weight per one million parts by weight of the oilfield composition. In various embodiments, the crude oil is present in an amount of from 1000 to about 5,000, about 1500 to about 4500, about 2000 to about 4000, about 2500 to about 3500, or about 2500 to about 3000 parts by weight per one million parts by weight of the oilfield composition. In other embodiments, the crude oil is present in an amount of from 5000 to about 10,000, about 5500 to about 9500, about 6000 to about 9000, about 6500 to about 8500, or about 7000 to about 8000 parts by weight per one million parts by weight of the oilfield composition. In various non-limiting embodiments, all values and ranges of values including and between those set forth above are expressly contemplated for use herein.

### Method of Separating Crude Oil and Water

The disclosure also provides the method of separating crude oil and water. The method includes the steps of providing the O/W emulsion including crude oil and water; providing the cellulose ether; combining the cellulose ether and the O/W emulsion, wherein the cellulose ether is present in an amount of from about 1 to about 20 parts by weight per one million parts by weight of the combination of the cellulose ether and the O/W emulsion; and separating the crude oil from the water.

The method of separating the crude oil and the water may be further described as clarifying the water, isolating crude oil and water, treating the water, etc. The method of separating the crude oil and the water includes the step of providing the O/W emulsion including crude oil and water. The step of providing the O/W emulsion may be any in the art and is not particularly limited. For example, the O/W emulsion may be provided by combining crude oil with water. Alternatively, the O/W emulsion may be provided or obtained from various sources, e.g. directly from oilfield processes, from previous water treatment processes, from a storage pond, etc. The step of providing the O/W emulsion may be performed in one or more steps, in a batch or continuous process, etc.

The method also includes the step of providing the cellulose ether, which may be procured from a commercial or an internal source. The step of providing the cellulose ether may also be performed in one or more steps, in a batch or continuous process, etc. The step of providing the cellulose ether may be performed in any order relative to the step of providing the O/W emulsion, e.g. before, after, in concurrent with, etc. The step of providing the cellulose ether may further include a step of preparing the cellulose ether, e.g. derivatizing cellulose to form the cellulose ether, grinding the cellulose ether, and/or combining different types of cellulose ether, etc.

The cellulose ether may be provided in part or in whole, and in any physical form known in the art. For example, the cellulose ether may be provided in a solid form, e.g. solid pellets, powder, etc. The cellulose ether may be provided in a solution form, e.g. a liquid concentrate, a solution of cellulose ether in water, etc. The cellulose ether may also be provided as a paste, a slurry, etc.

The method further includes the step of combining the cellulose ether and the O/W emulsion. The step of combining may be any known in the art and is not particularly limited. For example, the step of combining may be described as adding the cellulose ether into the O/W emulsion, e.g. manually, using a chemical pump, using an automatic system, etc. The step of combining may be performed in various apparatus or container, e.g. in a well, in a tank, in a process flow, in a multi-step treatment system, etc. The step of combining may further include a step of mixing the cellulose ether and the O/W emulsion using various techniques and equipment, e.g. a mechanical agitator, a blender, a jet mixer, a circulating pump, etc. Additionally, the step of combining may include an optional step of heating or providing additional pressure which may help increase the solubility of the cellulose ether and/or distributing the cellulose ether more efficiently.

The cellulose ether and the O/W emulsion are typically combined such that the cellulose ether is present in an amount of from about 1 to about 20 parts by weight per one million parts by weight of the combination of the cellulose ether and the O/W emulsion. In various embodiments, the cellulose ether is present in an amount of 1 to about 20, about 2 to about 19, about 3 to about 18, about 4 to about 17, about 5 to about 16, about 6 to about 15, about 7 to about 14, about 8 to about 13, about 9 to about 12, or about 10 to about 11 parts by weight per one million parts by weight of the combination of the cellulose ether and the O/W emulsion. In various non-limiting embodiments, all values and ranges of values including and between those set forth above are expressly contemplated for use herein.

Subsequent to the step of combining the cellulose ether and the O/W emulsion, the crude oil and the water may be separated. The terminology "separate," "separating," "separated," and/or "separation" may or may not indicate a physical removal of the crude oil from the water. For example, the crude oil may aggregate and/or float on top of the water. Thus, the crude oil may not be suspended in the water or considered a component of the O/W emulsion, but may still be in direct contact with, or exposed to, the water, any residual O/W emulsion, and/or the cellulose ether. The step of separating the crude oil from the water may additionally and optionally include physically removing the crude oil, which may be performed using various tools and techniques, e.g. using a skimmer such as a weir skimmer, a drum skimmer, a tube skimmer, using absorbent particles or absorbent pads, or a separator utilizing more than one oil removal techniques, e.g. an API separator, a corrugated plate interceptor (CPI) separator, etc.

The step of separation can be used to decrease the amount of the crude oil suspended in the water. Typically, before the step of combining the cellulose ether and the O/W emulsion, the crude oil may be present in the O/W emulsion in an amount of from about 1000 to about 10,000 parts by weight per one million parts by weight of the O/W emulsion.

In the presence of the cellulose ether, a significant amount of the crude oil, e.g. about 80 and up to less than about 100 wt% of the crude oil may aggregate and be separated from the water. In various embodiments, about 80 to about 99 wt%, about 81 to about 98 wt%, about 82 to about 97 wt%, about 83 to about 96 wt%, about 84 to about 95 wt%, about 85 to about 94 wt%, about 86 to about 93 wt%, about 87 to about 92 wt%, about 88 to about 91 wt%, or about 89 to about 90 wt% of the crude oil may aggregate and be separated from the water. In various non-limiting embodiments, all values and ranges of values including and between those set forth above are expressly contemplated for use herein.

Hence, after the step of separating, the oilfield composition may be described as free of the crude oil. Alternatively, a minimal amount of residual crude oil may remain in the water as the O/W emulsion. Accordingly, the amount of residual crude oil present in the O/W emulsion and the amount of residual crude oil present in the combination of the cellulose ether and the O/W emulsion may also decrease after the step of separating. The amount of residual crude oil in water may be measured using various methods, e.g. using a digital oil in water analyzer instrument. Conditions and settings of such instruments may vary, e.g. output signals of from about 0 to about 20 mA, at a temperature of about 1 to about 40 °C, using a supply frequency of from about 50 to about 60 Hz, etc. In various embodiments, the residual crude oil, measured using any of the aforementioned conditions, is present in an amount of from about 1 to about 200 parts by weight per million parts by weight of the combination of the cellulose ether and the O/W emulsion. In other embodiments, the residual crude oil is present in an amount of from about 1 to about 30, about 2 to about 29, about 3 to about 28, about 4 to about 27, about 5 to about 26, about 6 to about 25, about 7 to about 24, about 8 to about 23, about 9 to about 22, about 10 to about 21, about 11 to about 20, about 12 to about 19, about 13 to about 18, about 14 to about 17, or about 15 to about 16 parts by weight per million parts by weight of the combination of the cellulose ether and the O/W emulsion. In yet other embodiments, the residual crude oil is present in an amount of from about 30 to about 200, about 40 to about 190, about 50 to about 180, about 60 to about 170, about 70 to about 160, about 80 to about 150, about 90 to about 140, about 100 to about 130, or about 110 to about 120 parts by weight per million parts by weight of the combination of the cellulose ether and the O/W emulsion. In various non-limiting embodiments, all values and ranges of values including and between those set forth above are expressly contemplated for use herein.

### EXAMPLES

Various cellulose ethers in various amounts are added to O/W emulsions to form various oilfield compositions (Compositions 1 to 12), as reported in Table 1 below. O/W emulsions are formed by mixing crude oil with brine (a solution of about 3 to 10 wt% sodium chloride in water), using an Ultra-turrax disperser, such that the crude oil is present in an amount of from about 0.1 to about 1 wt%, based on a total weight of the O/W emulsion.

Comparative example 1 (CE 1) only includes the O/W emulsion, which may be known as a blank, and is accordingly free of the cellulose ether and/or any water clarifier. CE's 2 to 5 include various commercial water clarifiers in the O/W emulsions, in an amount that is comparable to the amount of the cellulose ethers in Compositions 1 to 12, as also shown in Table 1. CE's 1 to 5 are free of cellulose ether.

The clarity of the inventive oilfield compositions and comparative examples may be qualitatively monitored by eye.

**Table 1. Cellulose Ethers and Commercial Water Clarifiers in Oilfield Compositions and Comparative Examples.**

| **Composition** | **Cellulose Ether** | **Mw/DS** | **Amount (ppm)** | **Commercial Water Clarifier** | **Amount (ppm)** |
|---|---|---|---|---|---|
| 1 | Carboxymethyl cellulose | High/~0.6 | 3 | --- | 0 |
| 2 | Carboxymethyl cellulose | Low-Medium/~0.7 | 3 | --- | 0 |
| 3 | Carboxymethyl cellulose | High/~0.8 | 3 | --- | 0 |
| 4 | Carboxymethyl cellulose | Medium/~0.6 | 3 | --- | 0 |
| 5 | Carboxymethyl cellulose | Medium/~0.6 | 3 | --- | 0 |
| 6 | Carboxymethyl cellulose | Medium/~0.55 | 3 | --- | 0 |
| 7 | Ethyl Hydroxyethyl Cellulose | High | 2 | --- | 0 |
| 8 | Ethyl hydroxyethyl cellulose | High | 2 | --- | 0 |
| 9 | Carboxymethyl cellulose | High/~0.6 | 5 | --- | 0 |
| 10 | Carboxymethyl cellulose | Low-Medium/~0.7 | 5 | --- | 0 |
| 11 | Ethyl Hydroxyethyl Cellulose | High | 5 | --- | 0 |
| 12 | Ethyl Hydroxyethyl Cellulose | High | 5 | --- | 0 |
| CE 1 | --- | --- | 0 | --- | 0 |
| CE 2 | --- | --- | 0 | High MW cationic polymer | 10 |
| CE 3 | --- | --- | 0 | High MW cationic polymer | 20 |
| CE 4 | --- | --- | 0 | High MW amphoteric polymer | 10 |
| CE 5 | --- | --- | 0 | High MW amphoteric polymer | 20 |

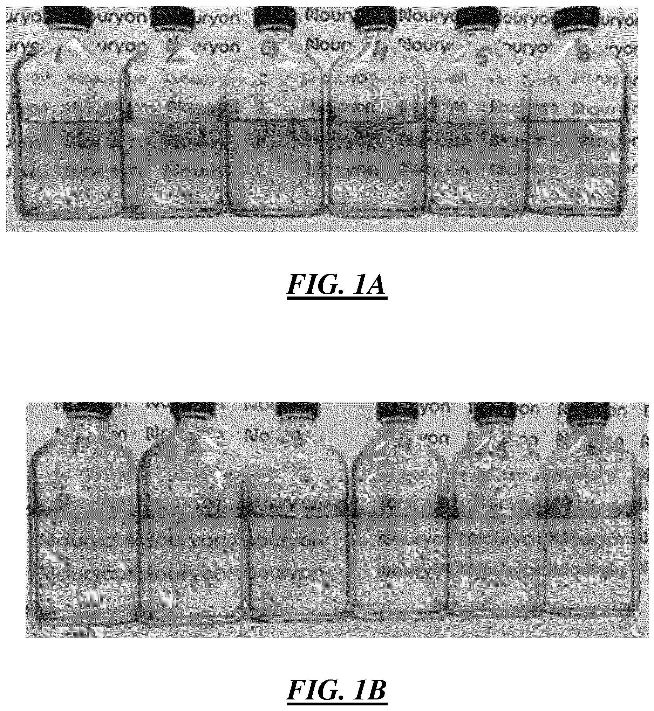

The clarity of the O/W emulsions before and after the addition of the cellulose ethers to form the oilfield compositions, as shown in FIGS. 1A, 1B, 2, and 3, are observed by eye and compared to demonstrate the effectiveness of the cellulose ethers as water clarifiers.

FIGS. 1A and 1B are photographs of six containers of O/W emulsions, before and after combining with the cellulose ethers, respectively. More specifically, FIG. 1B was imaged about 10 minutes after the addition of the cellulose ethers to the O/W emulsions. As shown in FIGS. 1A and 1B, the O/W emulsions treated with the cellulose ethers to form Compositions 1 to 6, arranged from left to right, exhibit better clarity than the O/W emulsions before being treated with cellulose ether, which shows the effectiveness of the cellulose ethers at clarifying water and/or reducing the crude oil dispersed in O/W emulsions.

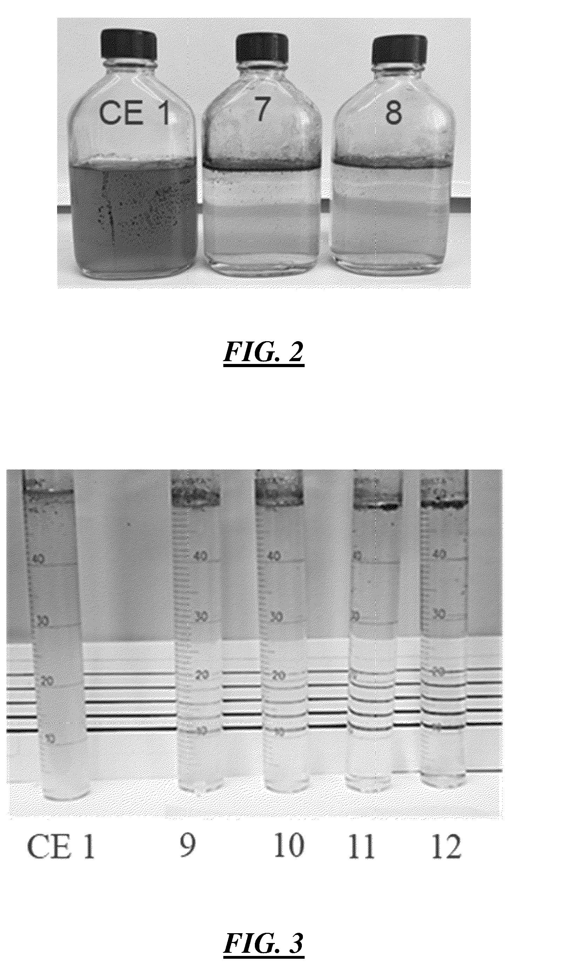

FIG. 2 is a photograph of three containers of CE 1, which is free of the cellulose ether and/or any commercial water clarifier, and Compositions 7 and 8, arranged from left to right, which were formed by adding the cellulose ethers to the O/W emulsions two minutes prior to imaging. FIG. 2 shows that CE 1 exhibits a cloudy appearance. FIG. 2 also shows that Compositions 7 and 8 exhibit a clear appearance. Accordingly, the cellulose ethers included in Compositions 7 and 8 were demonstrated to be effective at reducing the crude oil dispersed in the O/W emulsions in as little as two minutes.

FIG. 3 is photograph of five test tubes filled with CE 1, which is free of the cellulose ether and/or any commercial water clarifier, and Compositions 9 to 12, arranged from left to right, imaged 10 minutes after the addition of the cellulose ethers to each respective O/W emulsion. FIG. 3 shows that Compositions 9 to 12 exhibit an improved clarity over CE 1, which shows the effectiveness of the cellulose ethers at clarifying water and/or reducing the crude oil dispersed in O/W emulsions.

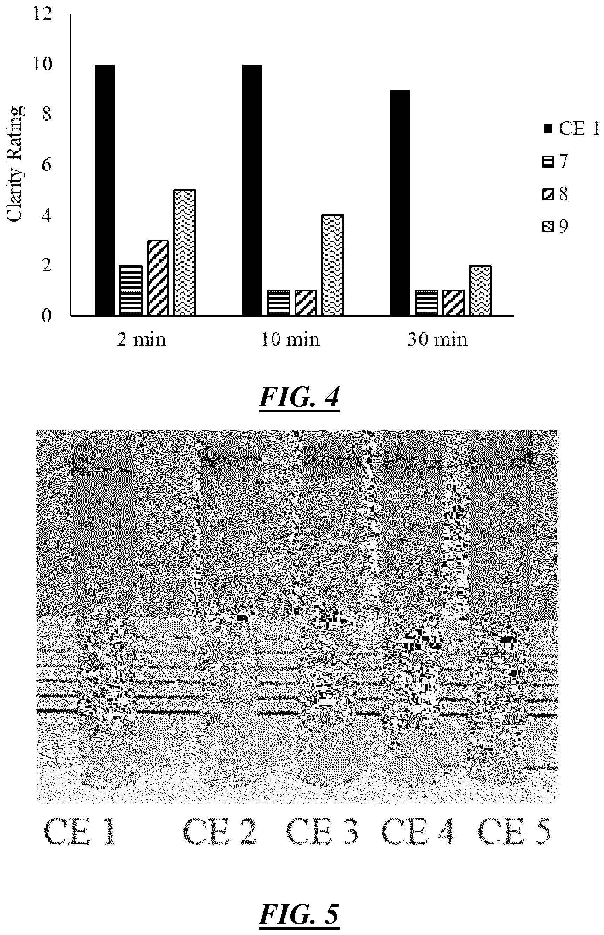

FIG. 4 is a combination of bar graphs showing the clarity rating of CE 1, and Compositions 7 to 9, arranged from left to right, at three different time points of two-minutes, ten-minutes, and thirty-minutes after the addition of the cellulose ethers to each respective O/W emulsion. FIG. 4 shows that at the two-minute time points, the improvement in the clarity rating of Compositions 7 to 9 is observable. At the two-minute time point, Compositions 7 to 9 show a drastic improvement in clarity rating compared to CE 1. Further improvement in the clarity rating occurs between measurements at the two-minute time point and the ten-minute time point for Compositions 7 to 9. No change in the clarity rating for CE 1 is observed at the ten-minute time point. Between the ten-minute time point and thirty-minute time point, Composition 9 once again improves in clarity rating, while minimal changes are observed for Compositions 7 and 9. Surprisingly, FIG. 4 shows that the cellulose ethers included in Compositions 7 to 9 are effective at improving clarity in as little as two minutes. Additionally, FIG. 4 also shows that the cellulose ethers included in Compositions 7 and 8 are faster acting than the cellulose ether included in Composition 9. However, all compositions examined are shown to drastically improve clarity after thirty minutes. As shown in FIG. 4, the clarity rating of CE 1 remains relatively unchanged throughout all three time points.

The performance of the cellulose ethers as water clarifiers may be compared to the performance of commercial water clarifiers, which are included in the CE's 2 to 5. FIG. 5 is photograph of five test tubes filled with CE 1, which is free of the cellulose ether and/or any commercial water clarifier, and CE's 2 to 5, arranged from left to right, imaged 10 minutes after the addition of water clarifiers to each respective O/W emulsion. FIG. 5 shows that there is minimal and/or no difference in clarity and appearance between the test tubes, thus indicating that the commercial water clarifiers are not effective at clarifying water and/or reducing the crude oil dispersed in O/W emulsions.

Compared to the comparative examples, the inventive oilfield compositions exhibit an improved clarity, which may be observed by eye in as little as two minutes. This result is superior and unexpected over the comparative examples. This performance also shows that the cellulose ethers of this disclosure are superior to the commercial water clarifiers at clarifying water and/or reducing the crude oil dispersed in O/W emulsions. Overall, the cellulose ethers can be non-toxic biocompatible and/or biodegradable, while also provides superior water clarifying performance over commercial synthetic products.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration in any way. Rather, the foregoing detailed description will provide those skilled in the art with a convenient road map for implementing an exemplary embodiment. It being understood that various changes may be made in the function and arrangement of elements described in an exemplary embodiment without departing from the scope as set forth in the appended claims.

The present disclosure may be further described with reference to the following Aspects.
**Aspect 1.** An oilfield composition comprising:
   an O/W emulsion comprising crude oil and water; and
   a cellulose ether that has the structure: 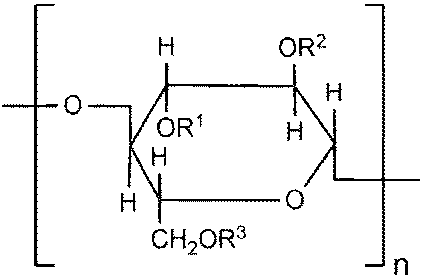 wherein each R¹, R² and R³ is independently H, a carboxymethyl group, a C1-C18 alkyl group, or a C2-C3 hydroxy alkyl group, so long as not all R¹, R² and R³ are H;
   wherein n is from about 800 to about 10,000; and
   wherein the cellulose ether is present in an amount of from about 1 to about 20 parts by weight per one million parts by weight of the composition.
**Aspect 2.** The composition of Aspect 1 wherein the cellulose ether is carboxymethyl cellulose.
**Aspect 3.** The composition of Aspect 1 wherein the cellulose ether is carboxymethyl cellulose sodium salt.
**Aspect 4.** The composition of Aspect 1 wherein each R¹, R² and R³ is independently H, a *C1-*C5 alkyl group, or a C2-C3 hydroxy alkyl group, so long as not all R¹, R² and R³ are H.
**Aspect 5.** The composition of Aspect 1 wherein each R¹, R² and R³ is independently H, methyl, ethyl, a hydroxypropyl group, or a hydroxyethyl group, so long as not all R¹, R² and R³ are H.
**Aspect 6.** The composition of Aspect 1 wherein the cellulose ether is methyl cellulose.
**Aspect 7.** The composition of Aspect 1 wherein the cellulose ether is ethyl cellulose.
**Aspect 8.** The composition of Aspect 1 wherein the cellulose ether is hydroxypropyl cellulose.
**Aspect 9.** The composition of Aspect 1 wherein the cellulose ether is hydroxyethyl cellulose.
**Aspect 10.** The composition of Aspect 1 wherein the cellulose ether is hydroxypropyl methyl cellulose.
**Aspect 11.** The composition of Aspect 1 wherein the cellulose ether is hydroxyethyl methyl cellulose.
**Aspect 12.** The composition of Aspect 1 wherein the cellulose ether is ethyl hydroxyethyl cellulose.
**Aspect 13.** The composition of Aspect 1 wherein the cellulose ether is methyl ethyl hydroxyethyl cellulose.
**Aspect 14.** The composition of Aspect 1 wherein n is from about 3000 to about 10,000.
**Aspect 15.** The composition of Aspect 1 wherein the cellulose ether is present in an amount of from about 1 to about 5 parts by weight per one million parts by weight of the composition.
**Aspect 16.** A method of separating crude oil and water, said method comprising the steps of:
   a) providing an O/W emulsion comprising crude oil and water;
   b) providing cellulose ether of any preceding claim;
   c) combining the cellulose ether and the O/W emulsion, wherein the cellulose ether is present in an amount of from about 1 to about 20 parts by weight per one million parts by weight of the combination of the cellulose ether and the O/W emulsion; and subsequently
   d) separating the crude oil from the water.
**Aspect 17.** The method of Aspect 16 wherein n is from about 3000 to about 10,000.
**Aspect 18.** The method of Aspect 16 wherein before the step of combining, the crude oil is present in the O/W emulsion in an amount of from about 1000 to about 10,000 parts by weight per one million parts by weight of the O/W emulsion.
**Aspect 19.** The method of Aspect 16 wherein after the step of separating, residual crude oil is present in an amount of from about 1 to about 200 parts by weight per one million parts by weight of the combination of the cellulose ether and the O/W emulsion.
**Aspect 20.** The method of Aspect 16 wherein after the step of separating, residual crude oil is present in an amount of from about 1 to about 30 parts by weight per one million parts by weight of the combination of the cellulose ether and the O/W emulsion.

## Claims

1. An oilfield composition comprising:
an O/W emulsion comprising crude oil and water; and
a cellulose ether that has the structure: 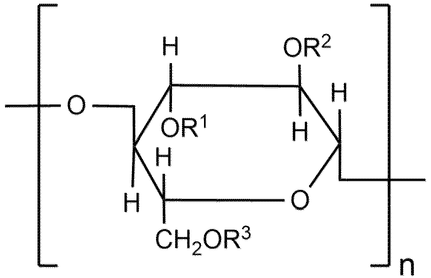
wherein each R¹, R² and R³ is independently H, a carboxymethyl group, a C1-C18 alkyl group, or a C2-C3 hydroxy alkyl group, so long as not all R¹, R² and R³ are H;
wherein n is from about 800 to about 10,000; and
wherein the cellulose ether is present in an amount of from about 1 to about 20 parts by weight per one million parts by weight of the composition.

2. The composition of claim 1, wherein the cellulose ether is carboxymethyl cellulose or a salt thereof, such as a sodium salt.

3. The composition of claim 1, wherein each R¹, R² and R³ is independently H, a C1-C5 alkyl group, or a C2-C3 hydroxy alkyl group, so long as not all R¹, R² and R³ are H.

4. The composition of claim 1, wherein each R¹, R² and R³ is independently H, methyl, ethyl, a hydroxypropyl group, or a hydroxyethyl group, so long as not all R¹, R² and R³ are H.

5. The composition of claim 1, wherein the cellulose ether is methyl cellulose, ethyl cellulose, hydroxypropyl cellulose, hydroxyethyl cellulose, hydroxypropyl methyl cellulose, hydroxyethyl methyl cellulose, ethyl hydroxyethyl cellulose, methyl ethyl hydroxyethyl cellulose, or combinations thereof.

6. The composition of any one of claims 1 to 5, wherein n is from about 3000 to about 10,000.

7. The composition of any one of claims 1 to 6, wherein the cellulose ether is present in an amount of from about 1 to about 5 parts by weight per one million parts by weight of the composition.

8. A method of separating crude oil and water, said method comprising the steps of:
a) providing an O/W emulsion comprising crude oil and water;
b) providing cellulose ether of any preceding claim;
c) combining the cellulose ether and the O/W emulsion, wherein the cellulose ether is present in an amount of from about 1 to about 20 parts by weight per one million parts by weight of the combination of the cellulose ether and the O/W emulsion; and subsequently
d) separating the crude oil from the water.

9. The method of claim 8, wherein n is from about 3000 to about 10,000.

10. The method of claims 8 or 9, wherein before the step of combining, the crude oil is present in the O/W emulsion in an amount of from about 1000 to about 10,000 parts by weight per one million parts by weight of the O/W emulsion.

11. The method of any one of claims 8 to 10, wherein after the step of separating, residual crude oil is present in an amount of from about 1 to about 200 parts by weight per one million parts by weight of the combination of the cellulose ether and the O/W emulsion.

12. The method of any one of claims 8 to 11, wherein after the step of separating, residual crude oil is present in an amount of from about 1 to about 30 parts by weight per one million parts by weight of the combination of the cellulose ether and the O/W emulsion.
